# EUROPEAN PATENT SPECIFICATION

(11) **EP 3 376 754 B1**
(45) Date of publication and mention of the grant of the patent: **06.10.2021**
(21) Application number: 17204560.1
(22) Date of filing: 30.11.2017
(51) Int. Cl.: H04N 5/3745, H04N 5/355

(54) **PIXEL ACQUISITION CIRCUIT, OPTICAL FLOW SENSOR, AND IMAGE ACQUISITION SYSTEM**
PIXEL-ERFASSUNGSSCHALTUNG, OPTISCHER DURCHFLUSS-SENSOR, UND BILDÜBERNAHMESYSTEM
CIRCUIT D'ACQUISITION DE PIXELS, CAPTEUR DE FLUX OPTIQUE, ET SYSTÈME D'ACQUISITION D'IMAGES

(30) Priority: 17.03.2017 CN 201710161456; 28.04.2017 US 201715581858; 15.11.2017 EP 17201888
(43) Date of publication of application: 19.09.2018
(73) Proprietor: OmniVision Sensor Solution (Shanghai) Co., Ltd, Putuo Dist, Shanghai 200333 (CN)
(72) Inventor: CHEN, Shoushun, Shanghai, 200333 (CN)
(74) Representative: 2K Patentanwälte Blasberg Kewitz & Reichel

(56) References cited:
- EP-A2- 2 512 125
- CN-A- 106 162 000
- US-A1- 2016 054 434

## Description

### Cross-Reference to Related Application

This application claims priority from CN Patent Application Serial No. 201710161456.X, filed on March 17, 2017.

### Technical Field

The invention relates to the field of image acquisition techniques, and more particularly relates to an optical flow sensor comprising an array of pixel acquisition circuits, , and to an image acquisition system.

### Background

With the development of information technology, computer vision and image information processing are becoming more and more important. Therein, the moving status of a target object can be determined by an optical flow method based on image information. The optical flow method can be applied in a number of fields, such as military astronautics, traffic surveillance, information science, meteorology, and medicine, etc.

The concept of optical flow was first introduced by Gibson in 1950. A physical object can be imaged by photosensitive elements. Each point in the resulted image is in a one-to-one correspondence with a respective point on the physical object. When the target object is moving in a three-dimensional scene, the brightness patterns of the corresponding image frame sequence will exhibit certain relevant flows. Such flows of image brightness patterns can be referred to as optical flows.

At present, optical flow algorithms are normally rather complex and computation-intensive. In order to perform optical flow calculations, front-end image acquisition devices are required to capture images at a high frame rate, then subsequent image processing devices perform computation-intensive optical flow analysis.

The existing optical flow algorithms require multiple frames of image information at first, then perform optical flow analysis through a relative high intensity of computation. Therefore, the existing optical flow analysis devices have a high requirement on data processing capabilities, and need improvement in real-timeness.

CN 106 162 000 A discloses a pixel acquisition circuit, an image sensor, and an image acquisition system. Therein, the pixel acquisition circuit comprises a photodetection unit, a filter-amplifier unit, a sample and hold unit, and an activation control unit. The photodetection unit is operative to output a first electrical signal corresponding to the light signal illuminating thereon in real time. The filter-amplifier unit has its input terminal coupled with the output terminal of the photodetector, and is operative to perform amplification and filtering out the signal component below a frequency threshold on the first electrical signal, so as to output a second electrical signal. A threshold comparison unit is operative to determine whether the second electrical signal is greater than a first threshold and/or less than a second threshold, and generate an activation instruction signal when the second electrical signal is greater than the first threshold or less than the second threshold. The sample and hold unit has its output terminal coupled with an interface bus. In response to receiving an activation instruction signal, the activation control unit instructs the sample and hold unit to acquire and buffer the first electrical signal, and sends a transmission request to the interface bus. It doesn't disclose a sample and hold unit operative to receive the activation signal which is outputted by a global trigger signal, and sample and hold the first electrical signal at the moment of the receiving of the activation signal. In this, the optical flow sensor in this invention could work in different operation modes.

EP 2 512 125 A2 discloses a pixel readout circuit for use with an imaging pixel array, the pixel readout circuit comprising: an input channel for receiving an image signal corresponding to electrical output of a photosensitive element of the pixel; and an electronic circuit interconnected between said input channel and an output readout utility. The electronic circuit comprises a capacitive unit, and a single analyzer. The capacitive unit is controllably linked to said input channel for accumulating a charge corresponding to received intensity generated by said pixel during a single frame period, and is connected to said output readout utility for transmitting image data thereto. The signal analyzer unit is controllably linked to said input channel for receiving and analyzing at least a part of said image signal, and is connected to said output readout utility, and is configured and operable for analyzing said at least a part of said image signal by determining an amount of accumulated charge corresponding to said received intensity, and upon detecting that said amount of the accumulated charge satisfies a predetermined condition generating data indicative of a detected event and transmitting said data to said output readout utility.

US 2016/054434 A1 discloses an imaging device comprises of a pixelated array of semiconductor detector elements, in which each detecting element is electrically connected to an integrated circuit, the integrated circuit of each of the pixels comprising a passive signal path and a transient signal path. The passive path provides consecutive frame or scene imaging and the transient path detects the transient electromagnetic events such as laser pulses. The transient path is electrically connected to a timing circuit, the timing circuit for determining the time-of-flight of return pulses emitted from the electromagnetic source detected by the transient signal paths. Wherein the passive path and transient path operate simultaneously enabling simultaneous passive and LADAR imaging.

Therefore, the invention proposes a new scheme for optical flow acquisition.

### Summary

The invention provides a new technical scheme to acquire the optical flow information, thus effectively solving at least one of the above-mentioned problems.

In accordance with an aspect of the invention, an optical flow sensor comprising an array of pixel acquisition circuits is provided, each pixel acquisition circuit comprises: a photodetection unit, a signal detection unit, an OR logic unit, an acquisition control unit, a sample and hold unit, and a signal output unit. The photodetection unit is operative to output a first electrical signal corresponding to the light signal illuminating thereon in real time. The signal detection unit, with its input terminal coupled with the output terminal of the photodetection unit, is operative to output a first trigger signal the moment when the first electrical signal meets predetermined trigger conditions and when a reset signal received from a reset signal line is OFF. The OR logic unit, with its input terminal coupled with both the output terminal of the signal detection unit and a global trigger signal line of the optical flow sensor, is operative to output an acquisition instruction signal when receiving the first trigger signal or a global trigger signal from the global trigger signal line. The acquisition control unit, with its input terminal coupled with the output terminal of the OR logic unit, is operative to generate and keep an activation signal when receiving the acquisition instruction signal. The sample and hold unit, with its first input terminal coupled with the output terminal of the photodetection unit, its second input terminal coupled with a time signal line, and its third input terminal coupled with the output terminal of the acquisition control unit, is operative to receive the activation signal, and sample and buffer the first electrical signal and/or time signal at the moment of the receiving of the activation signal. The signal output unit, being coupled with both the acquisition control unit and the sample and hold unit, is operative to buffer and output the activation signal, the first electrical signal and/or time signal most recently sampled by the sample and hold unit. The global control unit is configured to send the reset signal through the reset signal line to all the signal detection units and to all acquisition control units, the time period between two adjacent reset signals corresponds to one frame, wherein in imaging mode, the global control unit is configured to send, following the reset signal, a global trigger signal through the global trigger signal line to all the pixel acquisition circuit and all others in a pixel acquisition circuit array, which activates all the pixel acquisition circuits to sample an image frame by setting by setting the acquisition control units, and wherein in optical flow mode, the global control unit does not output the global trigger signal between two reset signals, so that the pixel acquisition circuits decide whether to be activated and acquire an optical flow frame according to the change of relevant detected light intensity.

In accordance with a preferred embodiment of the invention, the optical flow sensor further comprises a waveform generator and a readout unit. The waveform generator is operative to output a periodic signal waveform to the time signal line coupled with each of the pixel acquisition circuits in the array. The global control unit is operative to output a global trigger signal and a reset signal to the whole pixel acquisition circuit array through the coupled global trigger signal line and reset signal line respectively. The readout unit is operative to read the signals output by at least a part of the pixel acquisition circuits in that array.

In accordance with another aspect of the invention, an image acquisition system is provided, which comprises an optical flow sensor in accordance with the invention, an optical flow pre-processor, and an image pre-processor. The image pre-processor is operative to receive information from the optical flow sensor under image mode. The optical flow pre-processor is operative to receive information from the optical flow sensor under optical flow mode.

In summary, the optical flow sensor in accordance with the invention can instruct the pixel acquisition circuit array to operate under image mode or optical flow mode through the global control unit. Under image mode, the pixel acquisition circuit array acquires a full image. Especially in some application scenarios demanding high-speed photography, the optical flow sensor in accordance with the invention is capable of capturing sharp and lag-free images thanks to the elimination of the exposure time. In this way, images acquired by the optical flow sensor can provide full background information for subsequent optical flow frames. Under optical flow mode, each pixel acquisition circuit responds to its local light intensity and determines whether to be activated based on the detected light intensity change. In this way, the pixel acquisition circuits of the invention can individually acquire a time signal relating to the optical flow information of a moving object, that is, to acquire an optical flow frame. On this basis, the motion trajectory of a target object can be fully characterized by multiple frames of time signals and corresponding address information acquired by the optical flow sensor of the invention. In summary, the optical flow sensor of the invention can provide clear and straightforward optical flow information, thus greatly reducing redundant information, and furthermore can reduce the computational complexity of subsequent optical flow algorithms and thus reduce latency in real-time applications of the optical flow algorithm.

### Brief Description of the Drawings

In order to accomplish the foregoing and related objects, certain illustrative aspects will be described hereby in connection with the following description and drawings, these aspects indicating the various ways in which the principles disclosed herein can be practiced, and all the aspects and equivalents thereto are intended to fall into the scope of the claimed subject matter. Through reading the following detailed description in conjunction with the drawings, the foregoing and other objects, features, and advantages of the disclosure will become more apparent. The same parts or elements are generally denoted with the same reference numbers throughout the disclosure.
Fig. 1 shows a schematic diagram of an image acquisition system 100 in accordance with some embodiments of the invention;
Fig. 2A, 2B, 2C, and 2D respectively shows an embodiment of the concrete operation time sequence of an optical flow sensor in accordance with the invention;
Fig. 3A shows an application scenario of an embodiment of the optical flow sensor in accordance with the invention;
Fig. 3B shows a diagram indicating the locations of a moving object A in the field of view at the time instants t=0ms, 1ms, 2ms and 6ms, respectively;
Fig. 3C shows a diagram of mappings between the time signals and addresses obtained by an optical flow pre-processor in the application scenario shown in Fig. 3A;
Fig. 3D shows a time slope image formed when the moving object A passes the field of view in the same direction (the Y direction) but at different moving speeds;
Fig. 3E and 3F respectively shows a time slope image in which the moving object A moves along the X direction and the direction with 45°clockwise from the X direction, respectively;
Fig. 4 shows a schematic diagram of a pixel acquisition circuit 400 in accordance with some embodiments of the invention;
Figs. 5A, 5B, 5C, and 5D respectively shows a schematic diagram of a photodetection unit in accordance with an embodiment of the invention;
Fig. 6A, 6B, 6C, and 6D respectively shows a schematic diagram of a signal processing module in accordance with and embodiment of the invention;
Figs. 7A, 7B, 7C, and 7D respectively shows a schematic diagram of a threshold comparison module in accordance with an embodiment of the invention;
Fig. 8A and Fig. 8B respectively shows a schematic diagram of a sample and hold unit in accordance with an embodiment of the invention;
Fig. 9A and Fig. 9B respectively shows a schematic diagram of a signal output unit in accordance with an embodiment of the invention;
Fig. 10 shows a schematic diagram of an optical flow sensor 500 in accordance with some embodiments of the invention; and
Fig. 11 shows a schematic diagram of one of the pixel acquisition circuits depicted in Fig. 10.

### Detailed Description

Exemplary embodiments of the disclosure will now be described in more details in conjunction with the drawings. Although exemplary embodiments of the disclosure are shown in the drawings, it should be understood that the disclosure can be implemented in various ways without being restricted to the embodiments set forth herein. On the contrary, these embodiments are provided for understanding the disclosure more thoroughly, and for being able to fully convey the scope of the disclosure to those skilled in the art.

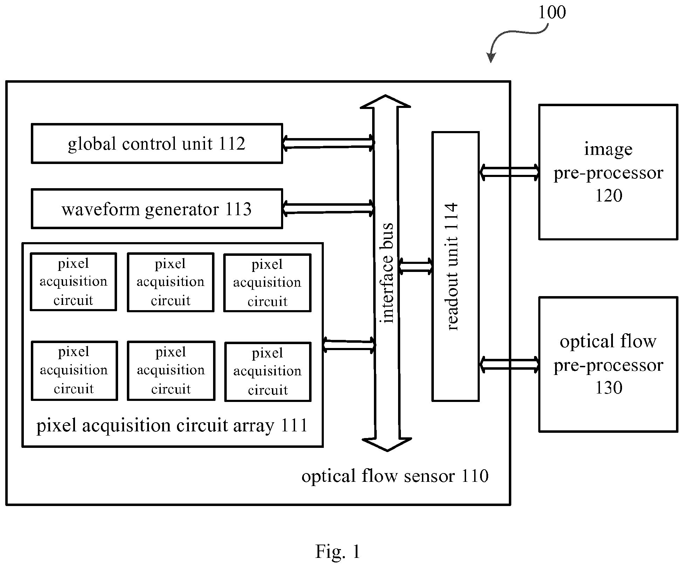

Fig. 1 shows a schematic diagram of an image acquisition system 100 in accordance with some embodiments of the invention. As shown in Fig. 1, the image acquisition system 100 comprises an optical flow sensor 110, an image pre-processor 120, and an optical flow pre-processor 130. The optical flow sensor 110 comprises a pixel acquisition circuit array 111, a global control unit 112, a waveform generator 113 and a readout unit 114. Herein, the array 111 is coupled to the global control unit 112, the waveform generator 113 and the readout unit 114 together.

It should first be noted that the existing image sensors normally generate a series of images (frames) in a certain frequency. Each frame is a full image within the image sensor's field of view. In terms of the information acquisition, the existing image sensors work at fixed intensity mode. In contrast to the prior techniques, the optical flow sensor 110 is more flexible, which means it could work in different operation modes. In particular, the optical flow sensor 110 of the invention can configure its operation mode in different time slices. The optical flow sensor 110 can independently configure its operation mode in each time period. There are two operation modes in total, i.e., optical flow mode and image mode.

In each time period under image mode, the global control unit 112 can instruct all the pixel acquisition circuits (i.e., pixel units) in the pixel acquisition circuit array 111 to synchronously acquire an electrical signal relating to the light intensity information. In other words, the global control unit 112 can globally activate the pixel acquisition circuit array 111 and acquire the electrical signal relating to a complete image. On this basis, the readout unit 114 can read the electrical signal relating to a complete image, and transmit it to the image pre-processor 120. The image pre-processor 120 can be configured to perform amplification and analog-digital conversion on the obtained electrical signals in order to obtain a digital image. Briefly speaking, the optical flow sensor 110 acquires an image frame in each time period under image mode.

In each time period under optical flow mode, the global control unit 112, by itself, does not activate the pixel acquisition circuits. The waveform generator 113 is operative to provide a periodic waveform signal to each pixel acquisition circuit. The periodic waveform signal could be, for example, a triangular wave, a sawtooth wave, or a sine wave, etc., but not limited thereto. Each pixel acquisition circuit in the array 111 continuously monitors the information of light intensity illuminating thereon in real time. When a pixel acquisition circuit detects that the change of the light intensity information meets predetermined conditions (for example, both the amount and rate of illuminance change exceed respective thresholds), it can turn into activated state in real time. Meanwhile, the pixel acquisition circuit can acquire the instantaneous voltage amplitude of the periodic signal waveform at the current phase as the time signal, or also an electrical signal corresponding to the current light intensity information. On this basis, the readout unit 114 can read the addresses and sampled time signals of the activated (triggered) pixel acquisition circuits. The information read by the readout unit 114 can be referred to as an optical flow frame. The readout unit 114 can transmit the optical flow frame to the optical flow pre-processor 130. The optical flow pre-processor 130 can perform operations such as analog-digital conversion on the time signals in the optical flow frame.

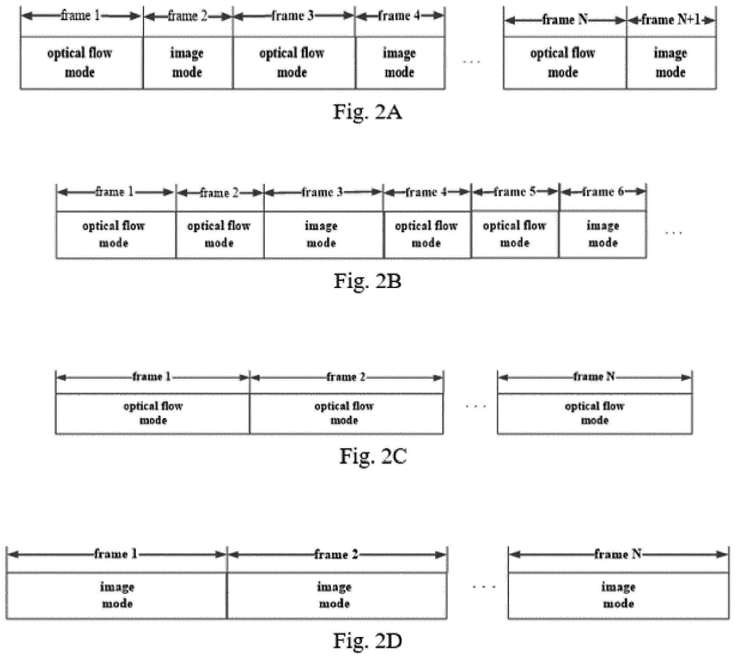

In summary, based on different configurations of basic operation modes in different time periods, the optical flow sensor 110 is versatile in operation time sequences. This could be illustrated by way of an example in conjunction with Figs. 2A, 2B, 2C, and 2D. To simplify the description, each time period in an operation time sequence will be referred to as a frame hereinafter.

In the embodiment shown in Fig. 2A, the optical flow sensor 110 works at optical flow mode in frame 1, image mode in frame 2, optical flow mode in frame 3, image mode in frame 4, and so forth. The optical flow sensor 110 switches mode once after each frame, thus operating alternately under optical flow mode and image mode. This operation time sequence is usually applied in the scenario of tracking the trajectory of a moving object. The image frames acquired by the optical flow sensor 110 under image mode provide full background information of the moving object. The optical flow frames acquired by the optical flow sensor 110 under optical flow mode provide the time and space information of when and where the motion is detected in this frame.

In the embodiment shown in Fig. 2B, the optical flow sensor 110 is in optical flow mode in frames 1 and 2, in image mode in frame 3, in optical flow mode in frames 4 and 5, in image mode in frame 6, and so forth. After every 2 frames in optical flow mode, the optical flow sensor 110 is in image mode for 1 frame.

In the embodiment shown in Fig. 2C, the optical flow sensor 110 is under optical flow mode in each frame.

In the embodiment shown in Fig. 2D, the optical flow sensor 110 is under image mode in each frame.

It should be noticed that the operation time sequence of the optical flow sensor 110 of the invention can also be configured in alternative but equivalent ways other than the examples presented above, which will not be elaborated herein.

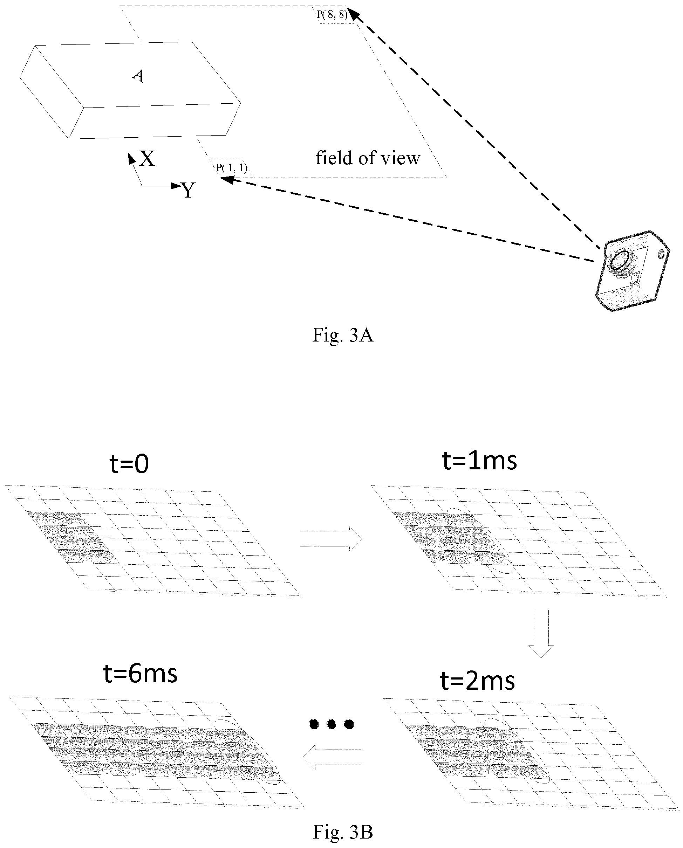

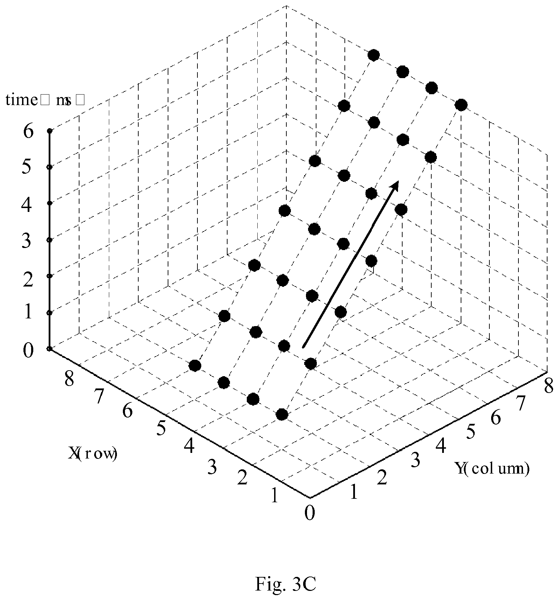

To explain more figuratively the operating process of the optical flow sensor, taking Figs. 3A, 3B, and 3C for examples, the operating process of the optical flow sensor 110 configured as shown in Fig. 2C will be set forth below.

Fig. 3A shows a typical application scenario of the optical flow sensor 110 of the invention. As shown in Fig. 3A, a moving object A enters the field of view of the optical flow sensor 110 at constant speed in the direction along the Y axis. To simplify the description, the optical flow sensor 110 is configured including an 8x8 pixel acquisition circuit array 111. Accordingly, the field of view corresponding to the array 111 can be divided into an 8x8 grid-like area. Furthermore, the grid cell in row x and column y is denoted with P(x,y). In Fig. 3A, the x (row) coordinate increases from bottom to top, and the y (column) coordinate increases from left to right. Each grid cell is in one-to-one correspondence with a respective pixel acquisition circuit. Fig. 3B shows a diagram of the locations of the moving object A in the field of view at time instants t=0ms, 1ms, 2ms and 6ms, respectively. Therein, the grid cells not covered by the moving object A in the field of view are shown in white, and the grid cells covered by the moving object A are shown in grey. The 4 time instants described above in turn correspond to 4 frames of the optical flow sensor 110 (as described above, each frame is an acquisition time period). Here, the light intensity of the moving object A differs much from that of the background. When the moving object A is passing a white background grid cell, the corresponding pixel acquisition circuit can detect the relevant light intensity change meets predetermined conditions, then turn into activated state immediately, and sample the instantaneous time signal.

At the time instant t = 0ms, the pixel acquisition circuits corresponding to P(3,1) to P(6,2), a total of 8 grid cells, go into activated state and acquire time signals. The readout unit 114 can read the corresponding optical flow frame.

At the time instant t = 1ms, the pixel acquisition circuits corresponding to P(3,3) to P(6,3), a total of 4 grid cells, acquire time signals in this frame. Whereas the light intensity information corresponding to the grid cells P(3,1) to P(6,2) does not change much, therefore the corresponding pixel acquisition circuits are not activated in this frame. The same analysis holds for the subsequent time instants t=2ms and 6ms, which will not be elaborated herein.

For the 4 time instants described above (t=0ms, 1ms, 2ms, and 6ms), the optical flow sensor 110 can acquire 4 optical flow frames. Based on these 4 optical flow frames, the optical flow pre-processor 130 (or other optical flow analysis devices) can determine the speed and direction information of the moving object (in fact, the projection of the moving object to a plane perpendicular to the camera). Fig. 3C shows such a diagram of mappings in terms of the time signals and corresponding pixel addresses obtained by the optical flow pre-processor the application scenario shown in Fig. 3A. This diagram of mappings can be referred to as a time slope image. Therein, the X axis and Y axis respectively represent the rows and columns of the pixel acquisition circuit array 111, and the Z axis represents time signals. The gradient of the time slope in Fig. 3C can characterize the speed of the moving object. The aspect (the direction of the arrow in the drawing) of the time slope in Fig. 3C can be used to analyze the moving direction information of the moving object.

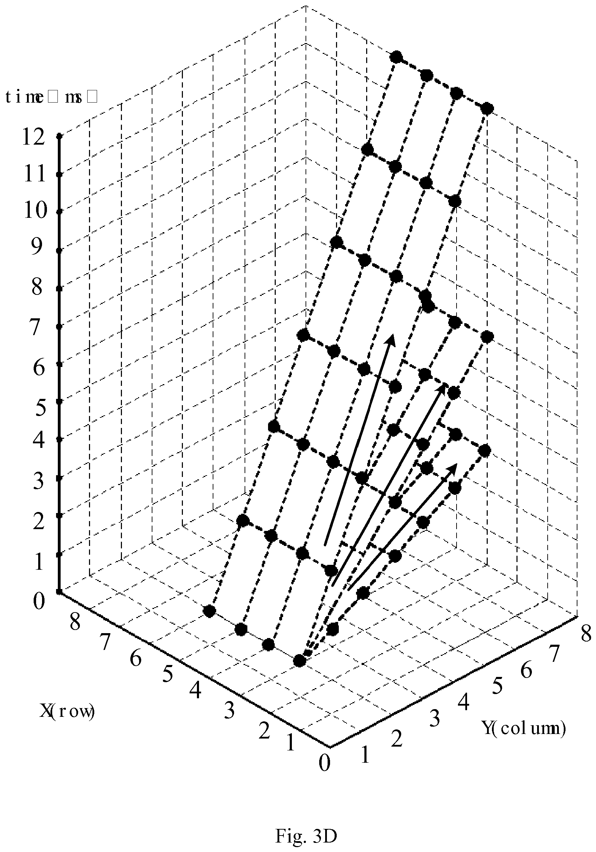

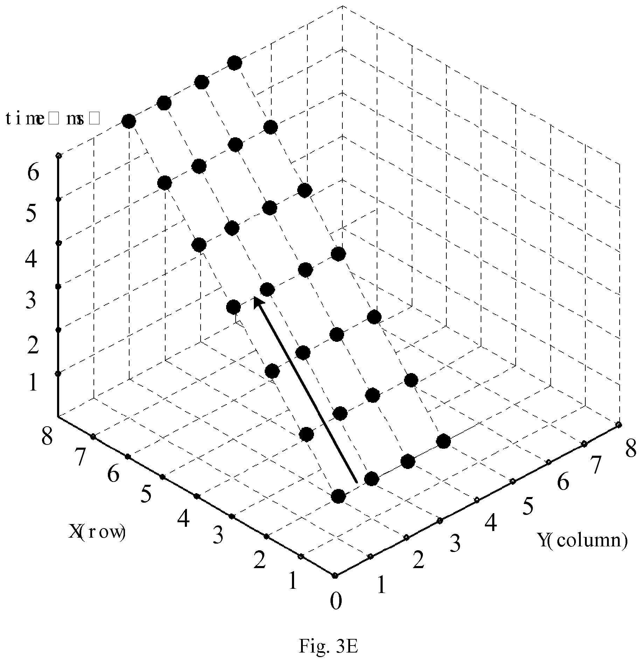

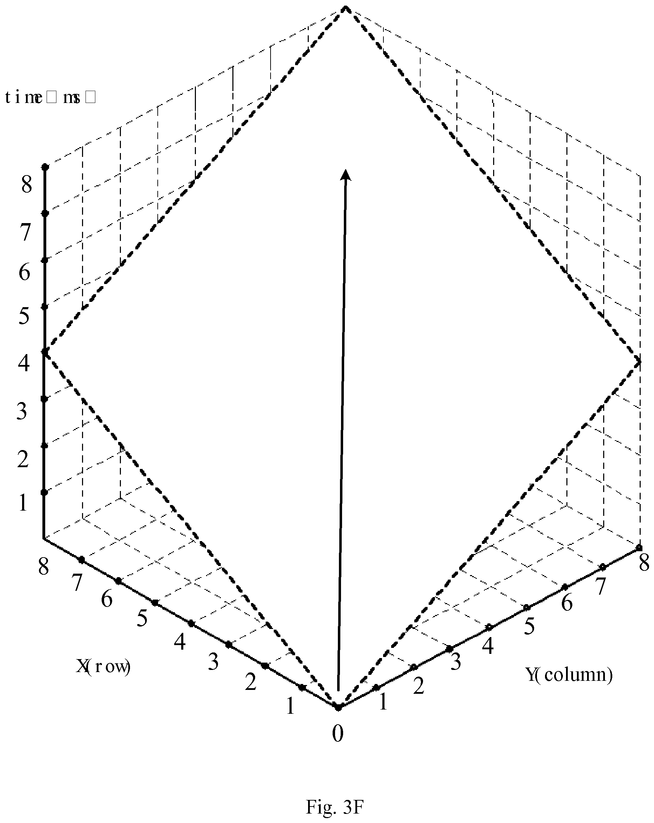

Fig. 3D shows a time slope image formed when the moving object passes the field of view in the same direction (the Y direction) but at different moving speeds. Since moving in the same direction, the aspects of the three time slopes are consistent with each other. However, the time slopes have different gradients due to different speeds. The three time slopes, in order of decreasing gradients, corresponds respectively to the speeds of 0.5 pixels per millisecond, 1 pixel per millisecond, and 2 pixels per millisecond. Thus it can be seen that the slower the object moves, the steeper the resulted time slope is. In contrast, the faster the object moves, the flatter the resulted time slope is. Fig. 3E and 3F respectively shows the time slope mappings formed by the target object A moving along the X direction and the direction of 45° clockwise from the X direction. By projecting the aspect (the vector) of the time slope in the respective drawing onto the XY plane, the moving direction of the object can be obtained conveniently.

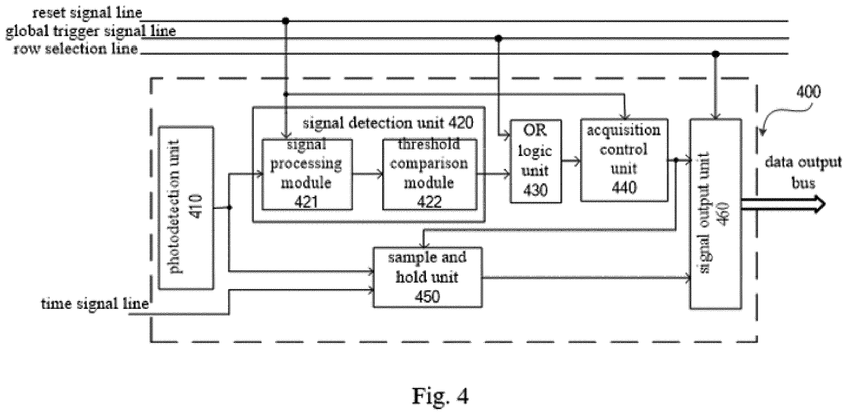

As described above, the pixel acquisition circuit array 110 of the invention supports both optical flow and image operation mode. The pixel acquisition circuits in the array 110 will be further elaborated below in conjunction with Fig. 4, which shows a schematic diagram of the pixel acquisition circuit 400 in accordance with some embodiments of the invention.

As shown in Fig. 4, the pixel acquisition circuit 400 comprises a photodetection unit 410, a signal detection unit 420, an OR logic unit 430, an acquisition control unit 440, a sample and hold unit 450, and a signal output unit 460.

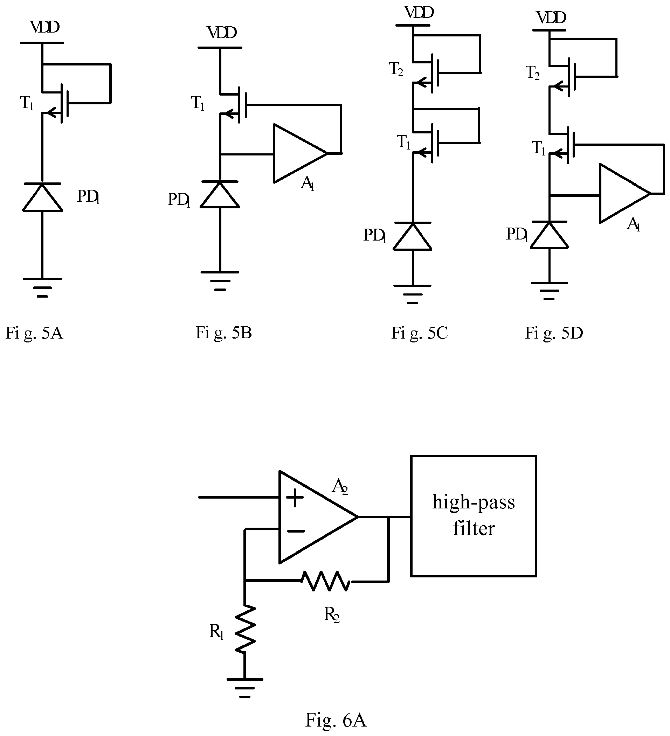

The photodetection unit 410 is operative to output a first electrical signal responding to the light signal illuminating thereon in real time. Here, the photodetection unit 410 can be but not limited to, for example, a variety of logarithmic photodetectors. Figs. 5A, 5B, 5C, and 5D respectively show a schematic diagram of a photodetection unit in accordance with an embodiment of the invention.

In the embodiment shown in Fig. 5A, the photodetection unit comprises a photodiode PD₁ with its anode grounded and a first transistor T₁. The first transistor T₁ has its source connected with the cathode of the photodiode PD₁ and its drain and gate connected to the power supply VDD. In an application scenario, the photodiode PD₁ receives an illumination signal, and then generates a photocurrent I in proportional to the incident light intensity. On this basis, the voltage difference between the source and gate of T₁ has a linear correlation with lnI. In other words, the first electrical signal output by the photodetection unit in this embodiment has a logarithmic relation with the intensity of the illumination light signal.

In the embodiment shown in Fig. 5B, the photodetection unit comprises a photodiode PD₁ with its anode grounded, a first transistor T₁, and a first amplifier A₁. The first transistor T₁ has its source connected with the cathode of the photodiode PD₁ and its drain connected with the power supply VDD. The first amplifier A₁ is connected between the cathode of the photodiode PD₁ and the gate of the first transistor T₁. Here, A₁ can increase the response speed of the voltage difference between the source and gate of T₁. In other words, A₁ increases the response speed of the pixel acquisition circuit to the change of light intensity.

In the embodiment shown in Fig. 5C, the photodetection unit comprises a photodiode PD₁ with its anode grounded and N transistors connected in series. The number N in Fig. 5C is 2 but not limited thereto. As for the N transistors connected in series, the source of the 1st transistor is connected with the cathode of the photodiode PDi. The drain of the Nth transistor is connected to the power supply VDD, each transistor has its gate and drain connected together, and the source of each of the 2nd to the Nth transistors is connected to the drain of the previous transistor. Here, the N transistors connected in series can increase the current (voltage) gain of the photodetector. Depending on the expectation of that gain, N can also be configured as any integer value greater than 2.

In the embodiment shown in Fig. 5D, the photodetection unit comprises a photodiode PD₁ with its anode grounded, N transistors connected in series, and a first amplifier A₁. In Fig. 5D, N is 2, and can also be an integer value greater than 2. The first amplifier A₁ is connected between the cathode of the photodiode PD₁ and the gate of the 1st transistor. The source of the 1st transistor is connected with the cathode of the photodiode PD₁. The drain of the Nth transistor is connected to the power supply VDD. The source of each of the 2nd to the Nth transistors is connected to the drain of the previous transistor, and each of the 2nd to the Nth transistors has its gate and drain connected together.

Apart from the several above-mentioned embodiments of the photodetection unit, the invention can also employ a variety of well-known continuous-time photodetection units, which will not be elaborated here. What needs to be explained is that the traditional photodetection techniques generally require the process of resetting a capacitor, and then conducting continuous exposure operation (continuous discharge of the capacitor), and then determining the accumulated illumination intensity according to the remaining charge of the capacitor. The photodetection unit 410 in accordance with the invention does not require extra exposure time in generating the light-intensity-related first electrical signal. Therefore, the photodetection unit 410 can output the first electrical signal with no delay.

The input terminal of the signal detection unit 420 is coupled with the output terminal of the photodetection unit 410. The signal detection unit 420 is operative to output a first trigger signal when detecting the first electrical signal meets predetermined trigger conditions. Here, the predetermined trigger conditions are that the change of light intensity information is both of enough speed and of enough strength. The change of light intensity satisfying this condition can be considered as being caused by valid motion of the target object. On the other hand, the change of light intensity that is of low speed or of low strength is usually caused by drift or jitter of the background light intensity.

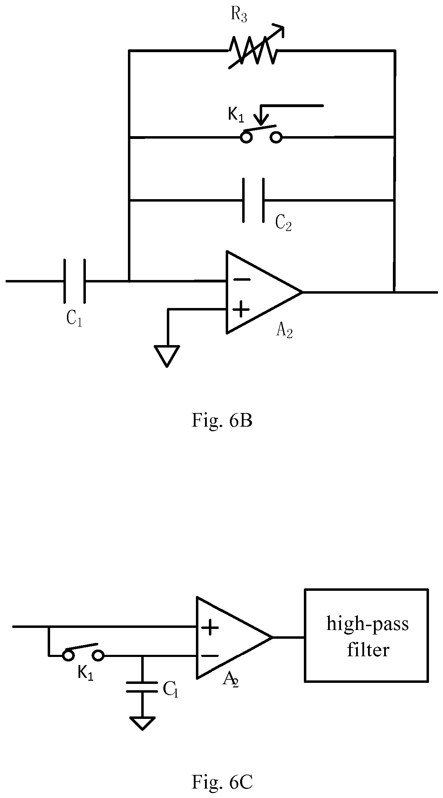

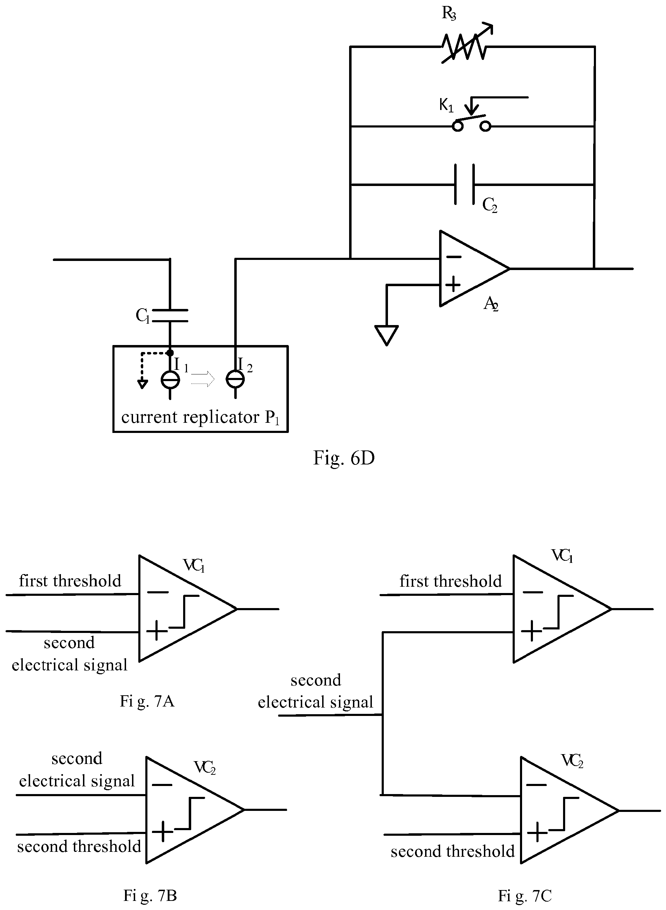

The signal detection unit 420 comprises a signal processing module 421 and a threshold comparison module 422. The signal processing module 421 can perform pre-processing on the first electrical signal. In an embodiment, the signal processing module 421 can perform a high-pass filtering process on the first electrical signal in order to filter out the low frequency component in the first electrical signal (i.e., to filter out the light intensity information with low rate of change). In another embodiment, aside from the high-pass filtering process, the signal processing module 421 can also perform an amplification process on the first electrical signal. The amplification process can increase the sensitivity of the pixel acquisition circuit in detecting light intensity change. The signal processing module 421 can employ a variety of well-known filtering and amplification techniques but not limited thereto. Fig. 6A, 6B, 6C, and 6D respectively shows a schematic diagram of a signal processing module in accordance with an embodiment of the invention.

In the embodiment shown in Fig. 6A, the signal processing module 421 comprises a second amplifier A₂ and a high-pass filter. The second amplifier A₂ has its positive input electrode connected with the output terminal of the photodetection unit, and its negative input electrode connected with a first resistor R₁ which acts as a pull-down resistor, and a second resistor (R₂) is connected across the output terminal and negative input electrode of the second amplifier A₂. The second amplifier A₂ is operative to perform an amplification process on the first electrical signal output by the photodetection unit. The high-pass filter connected with the second amplifier A₂ removes the signal component below a frequency threshold from the amplified first electrical signal, and outputs a second electrical signal.

In the embodiment shown in Fig. 6B, the signal processing module comprises a first capacitor C₁, a second amplifier A₂, a second capacitor C₂, a third resistor R₃, and a first switch K₁. The first terminal of the first capacitor C₁ is connected with the output terminal of the photodetection unit. The negative input electrode of the second amplifier A₂ is connected with the second terminal of the first capacitor C₁. The second capacitor C₂, the third resistor R₃, and the first switch K₁ are all connected in parallel across the negative input electrode and output terminal of the second amplifier A₂. Therein, while the reset signal line holds the reset signal, the first switch K₁ is switched on. In this embodiment, the first capacitor C₁ can isolate the direct current component of the first electrical signal. The ratio of the first capacitor C₁ to the second capacitor C₂ is the gain of the signal processing module. In addition, the second capacitor C₂ and the third resistor R₃ form a high-pass filter. This filter can filter out the signal component below a frequency threshold in the alternating current component of the first electrical signal. Here, the threshold depends upon the resistance of the third resistor R₃. The third resistor R₃ can be configured as an adjustable resistor, whose resistance can, for instance, be adjusted through an instruction signal from the image acquisition system via the global control unit. That instruction signal can be determined according to user input but not limited thereto.

In the embodiment shown in Fig. 6C, the signal processing module 421 comprises a first capacitor C₁, a first switch K₁, a second amplifier A₂, and a high-pass filter. The positive input electrode of the second amplifier A₂ is connected with the output terminal of the photodetection unit. The first capacitor C₁ has its first terminal connected with the negative input electrode of the second amplifier A₂ and its second terminal connected to a fixed potential. That fixed potential could be ground potential but not limited thereto. The first switch K₁ is connected between the first terminal of the first capacitor C₁ and the output terminal of the photodetection unit. The high-pass filter connected with that second amplifier A₂ is operative to filter out the signal component below a predetermined frequency threshold in the amplified first electrical signal, and generate a second electrical signal. Therein, while the reset signal line holds the reset signal, the first switch K₁ turns on. After the reset signal is revoked, the first switch K₁ turns off, and the capacitor C₁ samples the instantaneous first electrical signal. The second amplifier A₂ can amplify the differential signal between the first electrical signal and the voltage sampled by the capacitor C₁. The high-pass filter can filter out the signal component below a frequency threshold in the differential signal amplified by the second amplifier A₂, and output the second electrical signal.

The embodiments shown in Figs. 6A, 6B, and 6C are to perform amplification and filtering operations on the relative change of the first electrical signal. In addition, the signal processing module can achieve light intensity change detection by directly detecting the rate of change of the first electrical signal. Fig. 6D shows such an embodiment. In that embodiment, the signal processing module comprises a first capacitor C₁, a first switch K₁, a second amplifier A₂, a third adjustable resistor R₃, a second capacitor C₂, and a current replicator P₁. The first capacitor C₁ has its first terminal connected with the output terminal of the photodetection unit and its second terminal connected with the first terminal of the current replicator P₁. The second terminal of the current replicator P₁ is connected with the negative input electrode of the second amplifier A₂. The positive input electrode of the second amplifier A₂ is connected to a fixed potential. The second capacitor C₂, the third resistor R₃, and the first switch K₁ are all connected in parallel across the negative input electrode and output terminal of the second amplifier A₂. The first terminal and second terminal of the current replicator P₁ are respectively connected with a first current source I₁ and a second current source I₂. The current replicator has its first terminal clamped to a fixed potential, and replicates the current of the first capacitor C₁ to the second current source I₂ via the first current source I₁. The current replicator P₁ can be implemented according to a variety of well-known techniques, which will not be elaborated here. The first capacitor C₁ has its one terminal connected with the first electrical signal output by the photodetection unit and the other terminal connected with the first terminal of the current replicator P₁. According to the capacitor's voltage and current relationship, the current of the first capacitor C₁ is in direct proportion to the rate of change of the first electrical signal. This current is replicated via the current source I₁ to the current source I₂ to charge/discharge the second capacitor C₂, which finally results in a second electrical signal. On this basis, the amplitude of the second electrical signal is determined by the speed (the magnitude of the charging/discharging current I₂) and the duration of change (the duration of the charging/discharging current I₂) of the first electrical signal. Only the first electrical signal with enough duration of high speed of change can generate a large magnitude of the second electrical signal. In addition, the third resistor R₃ acts as a leakage resistor, which cancels out the charging/discharging effect of the second current source I₂ on the second capacitor C₂ when the second current source I₂ is too small. This removes the signal component below a frequency threshold in the alternating current component of the first electrical signal and implementing high-pass filtering. In addition, while the reset signal line holds the reset signal, the first switch K₁ turns on.

The threshold comparison module 422 has its input terminal coupled with the output terminal of the signal processing module 421, and can determine the magnitude of the first electrical signal having been processed by the signal processing module 421 (i.e., the second electrical signal). Once detecting the second electrical signal is greater than a first threshold or less than a second threshold, the threshold comparison module 422 outputs a first trigger signal to the OR logic unit 430.

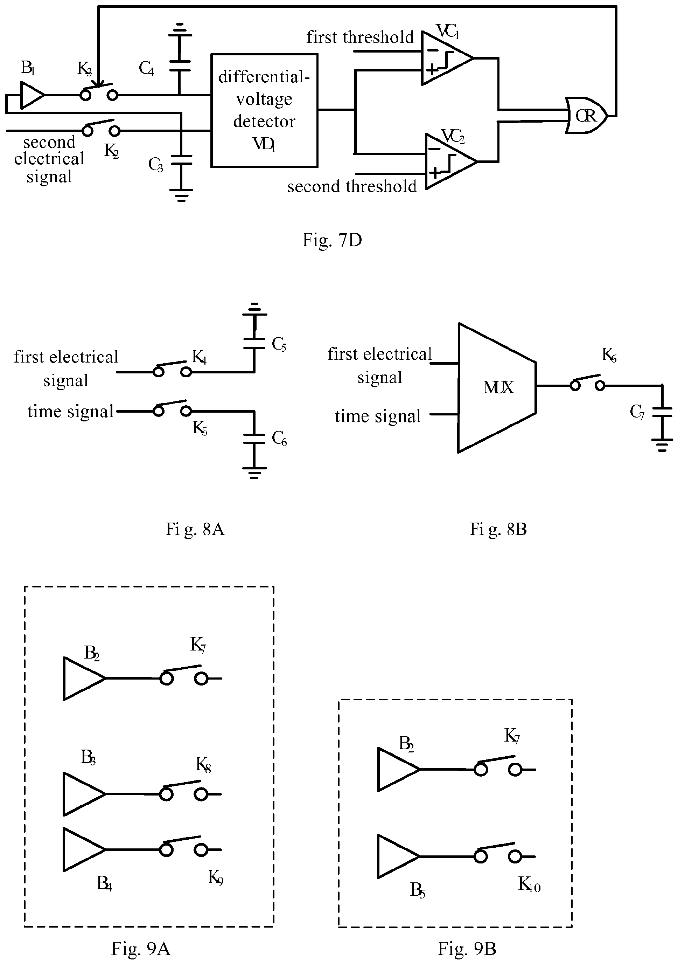

Depending on the desired configuration, the threshold comparison module 422 can just determine whether the second electrical signal is greater than the first threshold or not. In another example, the threshold comparison module 422 is configured to just determine whether the second electrical signal is less than the second threshold or not. In yet another example, the threshold comparison module 422 is configured to determine both whether the second electrical signal is less than the second threshold and greater than the first threshold. Therein, the second threshold is less than the first threshold. In this way, the threshold comparison module 422 in accordance with the invention can detect whether the amount of change of the illumination intensity of the pixel acquisition circuit is significant enough (the illumination intensity can either increase or decrease). Figs. 7A, 7B, 7C, and 7D respectively show a schematic diagram of a threshold comparison module in accordance with an embodiment of the invention.

In the embodiment shown in Fig. 7A, the threshold comparison module 422 comprises a first voltage comparator VC₁. The first voltage comparator VC₁ has its inverting input terminal connected with the signal line providing a first threshold, and its non-inverting input terminal connected to the output terminal of the signal processing module. In this way, the threshold comparison module of this embodiment can determine whether the second electrical signal is greater than the first threshold.

In the embodiment shown in Fig. 7B, the threshold comparison module 422 comprises a second voltage comparator VC₂. The second voltage comparator VC₂ has its non-inverting input terminal connected with the signal line providing a second threshold, and its inverting input terminal connected to the output terminal of the signal processing module. In this way, the threshold comparison module of this embodiment can determine whether the second electrical signal is less than the first threshold.

In the embodiment shown in Fig. 7C, the threshold comparison module 422 comprises a first voltage comparator VC₁ and a second voltage comparator VC₂. The first voltage comparator VC₁ has its inverting input terminal connected with the signal line providing a first threshold, and its non-inverting input terminal connected to the output terminal of the signal processing module 421. The second voltage comparator VC₂ has its non-inverting input terminal connected with the signal line providing a second threshold, and its inverting input terminal connected to the output terminal of the signal processing module 421.

In the embodiment shown in Fig. 7D, the threshold comparison module comprises a differential-voltage detector VD₁, a third capacitor C₃, a fourth capacitor C₄, a first buffer B₁, an OR logic switch OR, a second switch K₂, a third switch K₃, a first voltage comparator VC₁, and a second voltage comparator VC₂. The differential-voltage detector VD₁ has its first input terminal connected with the third capacitor C₃ which acts as a pull-down capacitor, and its second input terminal connected with the fourth capacitor C₄ which also acts as a pull-down capacitor. The second switch K₂ is placed between the third capacitor C₃ and the output terminal of the signal processing module 421. The first buffer B₁ and the third switch K₃ are connected in series between the third capacitor C₃ and the fourth capacitor C₄. The first buffer B₁ can be implemented as a voltage follower but not limited thereto. The first voltage comparator VC₁ has its inverting input terminal connected with the signal line providing a first threshold, and its non-inverting input terminal connected to the output terminal of the voltage differential detector VD₁. The second voltage comparator VC₂ has its non-inverting input terminal connected with the signal line providing a second threshold, and its inverting input terminal connected to the output terminal of the voltage differential detector VD₁. The OR logic switch OR has its first input terminal coupled with the output terminal of the first voltage comparator VC₁, its second input terminal coupled with the output terminal of the second voltage comparator VC₂, and its output terminal coupled with the input terminal of the OR logic unit 430. In this way, the differential-voltage detector VD₁ can compare the second electrical signal at the first input terminal with the signal held at the second input terminal, and output a differential signal. When the output signal of the voltage differential detector VD₁ is greater than the first threshold or less than the second threshold, the threshold comparison module 422 outputs a first trigger signal through the OR logic switch OR. In addition, when outputting the first trigger signal, the threshold comparison module 422 starts performing the following operations in sequence: turns off the second switch K₂, turns on the third switch K₃, turns off the third switch K₃, turns on the second switch K₂. In this way, the threshold comparison module can update the signal held at the second input terminal to the instantaneous second electrical signal at the first input terminal.

The OR logic unit 430 has its input terminal coupled with the output terminal of the signal detection unit 420 and the global trigger signal line of the optical flow sensor. The OR logic unit 430 is operative to output an acquisition instruction signal upon receiving the first trigger signal or a global trigger signal from the global trigger signal line.

The acquisition control unit 440 has its input terminal coupled with the output terminal of the OR logic unit 430. Upon receiving the acquisition instruction signal from the OR logic unit 430, the acquisition control unit 440 is operative to output (and keep) an activation signal. In an embodiment of the invention, the acquisition control unit 440 can keep the activation signal until receiving a reset signal from the reset signal line. The acquisition control unit 440 can be configured as a latch. Accordingly, the set input terminal of the latch is coupled with the output terminal of the OR logic unit 430. The latch has its reset input terminal coupled with the reset signal line and its output terminal coupled with the third input terminal of the sample and hold unit 450 and the signal output unit 460.

The sample and hold unit 450 has its first input terminal coupled with the output terminal of the photodetection unit 410, its second input terminal coupled with the time signal line, and its third input terminal coupled with the output terminal of the acquisition control unit 440. The sample and hold unit 450 is operative to sample and buffer the instantaneous first electrical signal and/or time signal at the moment of the arrival of the activation signal. The signal output unit 460 is coupled with both the acquisition control unit 440 and the sample and hold unit 450, and is operative buffer and output the activation signal and the first electrical signal and/or time signal most recently sampled by the sample and hold unit. Figs. 8A and 8B respectively shows an embodiment of a sample and hold unit. Fig. 9A and Fig. 9B respectively shows a schematic diagram of a sample and hold unit in accordance with an embodiment of the invention.

In the embodiment shown in Fig. 8A, the sample and hold unit 450 comprises a fifth capacitor C₅, a fourth switch K₄, a sixth capacitor C₆, and a fifth switch K₅. The first terminal of the fifth capacitor C₅ is grounded. The fourth switch K₄ is connected between the second terminal of the fifth capacitor C₅ and the output terminal of the photodetection unit 410. The first terminal of the sixth capacitor C₆ is grounded. The fifth switch K₅ is connected between the second terminal of the sixth capacitor C₆ and the time signal line. The signal output unit 460 connected with this embodiment is configured as the implementation shown in Fig. 9A. The signal output unit 460 comprises a second buffer B₂, a seventh switch K₇, a third buffer B₃, an eighth switch K₈, a fourth buffer B₄, and a ninth switch K₉. The input terminal of the second buffer B₂ is coupled with the output terminal of the acquisition control unit 440. The seventh switch K₇ is connected between the output terminal of the second buffer B₂ and the trigger state output line. The input terminal of the third buffer B₃ is coupled with the second terminal of the fifth capacitor C₅. The eighth switch K₈ is connected between the output terminal of the third buffer B₃ and the first electrical signal output line. The input terminal of the fourth buffer B₄ is coupled with the second terminal of the sixth capacitor C₆. The ninth switch K₉ is connected between the output terminal of the fourth buffer B₄ and the time signal output line. Upon receiving the activation signal, the sample and hold unit 450 can switch off the fourth switch K₄ and the fifth switch K₅. In this way, the fifth capacitor C₅ can sample and buffer the instantaneous first electrical signal. The sixth capacitor C₆ can sample and buffer the instantaneous time signal. During readout, the signal output unit 460 can switch on the seventh switch K₇, the eighth switch K₈, and the ninth switch K₉ according to the control signal. For instance, the readout unit of the optical flow sensor sends a row select signal through the row selection line to the signal output unit 460, thus switching on the seventh switch K₇, the eighth switch K₈, and the ninth switch K₉. In this way, the signal output unit 460 can output the activation signal, the first electrical signal, and the time signal.

In the embodiment shown in Fig. 8B, the sample and hold unit 450 comprises a multiplexer MUX, a seventh capacitor C₇, and a sixth switch K₆. The MUX has its first input terminal connected to the output terminal of the photodetection unit 410, and its second input terminal connected to the time signal line. The first terminal of the seventh capacitor C₇ is grounded. The sixth switch K₆ is connected between the output terminal of the MUX and the second terminal of the seventh capacitor C₇. Accordingly, the signal output unit 460 is configured as the implementation shown in Fig. 9B. The signal output unit 460 comprises a second buffer B₂, a seventh switch K₇, a fifth buffer B₅, and a tenth switch K₁₀. The input terminal of the second buffer B₂ is coupled with the output terminal of the acquisition control unit 440. The seventh switch K₇ is connected between the output terminal of the second buffer B₂ and the trigger state output line. The input terminal of the fifth buffer B₅ is coupled with the second terminal of the seventh capacitor C₇. The tenth switch K₁₀ is connected between the output terminal of the fifth buffer B₅ and the signal output line. In this embodiment, the MUX can be configured to connect with either the photodetection unit or the waveform generator according to the instruction from the optical flow sensor. In image mode, normally, the global control unit of the optical flow sensor can instruct the MUX to connect to the photodetection unit. In optical mode, on the other hand, the global control unit can instruct the MUX to connect with the waveform generator. The control instructions can be transmitted, for instance, through dedicated or reused control signal lines from the global control unit, which will not be elaborated here.

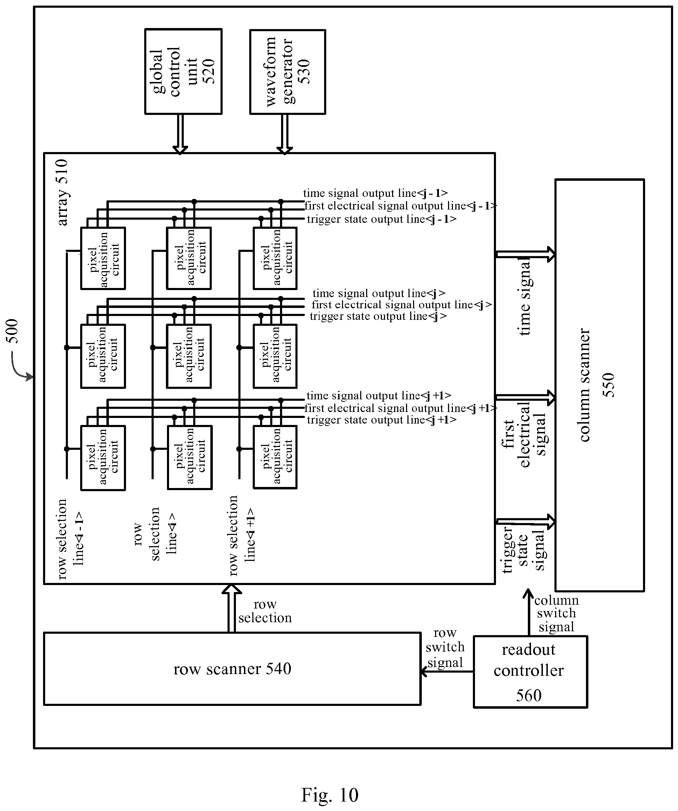

Fig. 10 shows a schematic diagram of an optical flow sensor 500 in accordance with some embodiments of the invention. As shown in Fig. 10, the optical flow sensor 500 comprises a pixel acquisition circuit array 510, a global control unit 520, a waveform generator 530, a row scanner 540, a column scanner 550, and a readout controller 560. Here, the row scanner 540, the column scanner 550 and the readout controller 560 constitute the readout unit. The waveform generator 530 is operative to output a periodic signal waveform to the time signal line coupled with each of the pixel acquisition circuits in the array. The global control unit 520 is operative to output the aforementioned global activation and reset signal to each pixel acquisition circuit through said global trigger signal line and reset signal line respectively. The readout unit is operative to read the signals output by at least a part of the pixel acquisition circuits in that array.

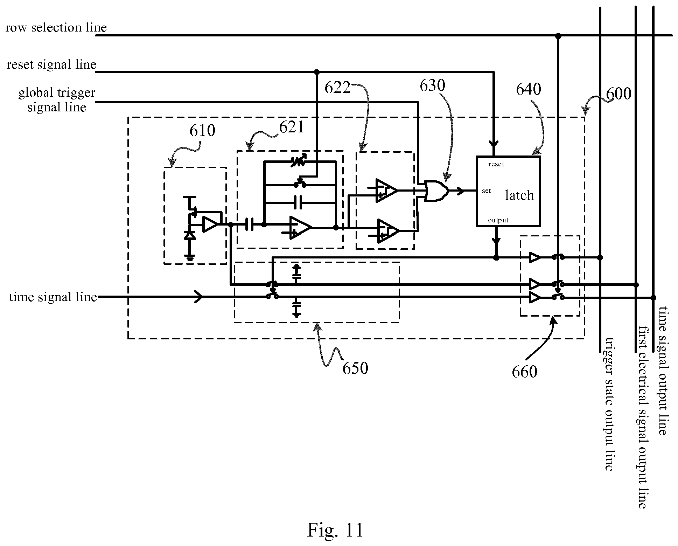

Fig. 10 shows a part of the pixel acquisition circuits in the array 510. This part of the pixel acquisition circuits can be divided by row into the i-1th row, the ith row, and the i+1th row, and can be divided by column into the j-1th column, the jth column, and the j+1th column. Take the pixel acquisition circuit in the ith row and the jth column for example, the output signal lines of each pixel acquisition circuit comprise one time signal output line, one first electrical signal output line, and one trigger state output line. Fig. 11 shows a schematic diagram of one of the pixel acquisition circuits depicted in Fig. 10.

In the embodiment shown in Fig. 11, the pixel acquisition circuit 600 comprises a photodetection unit 610, a signal detection unit, an OR logic unit 630, an acquisition control unit 640, a sample and hold unit 650, and a signal output unit 660. The photodetection unit 610 is configured as the implementation shown in Fig. 5B. In addition, the photodetection unit 610 can also be configured as the implementations shown in Fig. 5A, Fig. 5C, and Fig. 5D, which will not be elaborated here. The signal detection unit comprises a signal processing module 621 and a threshold comparison module 622. The signal processing module 621 is configured as the implementation shown in Fig. 6B. The threshold comparison module 622 is configured as the implementation shown in Fig. 7C. The sample and hold unit 650 is configured as the implementation shown in Fig. 8A. The signal output unit 660 is configured as the implementation shown in Fig. 9A.

The operating process of the optical flow sensor 500 will be further explained below in conjunction with Fig. 10 and Fig. 11. The global control unit 520 can control the frequency of information acquisition of the optical sensor through the reset signal. In fact, the time period between 2 adjacent reset signals corresponds to one frame (i.e., 1 acquisition time period). In other words, the global control unit 520 outputs one reset signal at a time, indicating the end of the last frame and the start of the new frame. Therefore, as to 2 adjacent reset signals, the first can be considered as a start reset signal, and the second can be considered as an end reset signal. For image frames following the start reset signal, a global trigger signal is sent by the global control unit 520 through the global trigger signal line to all the pixel acquisition circuits, which activates all the pixel acquisition circuits to sample an image frame.. For optical flow frames, the global control unit 520 will not output the global trigger signal between the start and end reset signals. In this way, based on the relevant detected light intensity change, the pixel acquisition circuits in the array 510 can decide whether to be activated and acquire the optical flow frame.

In image mode, the readout controller 560 can instruct the row scanner to select a row of pixel acquisition circuits in sequence. As for any row of pixel acquisition circuits, the row scanner can output a control signal through the row selection line to turn on the switches in the output signal units of all the pixel acquisition circuits in this row. On this basis, the readout controller 560 can instruct the column scanner to read the first electrical signal of each pixel acquisition circuit in that row one by one. On the other hand, depending on the specific data requirement, the column scanner can also be configured to read the time signal sampled by each pixel acquisition circuit.

In optical flow mode, the row scanner operates in the same way as in the image mode. The column scanner can be configured to read the time signal and trigger state signal of each pixel acquisition circuit one by one. In this way, the time signals of the pixel acquisition circuits that are in triggered state can be extracted from the optical flow frame read by the column scanner. The extracted time signals can provide the optical flow information of the moving object.

In another embodiment, aside from the ways of operation described above, the readout unit can also be configured to directly read the time signals of the triggered pixel acquisition circuits, while eliminates the first electrical signals or the trigger state signals under optical flow mode. In particular, the column scanner can also be configured to comprise a trigger state monitoring module (not shown in Fig. 10). Each time the column scanner scans one row of pixel acquisition circuits, the trigger state monitoring module controls the column scanner to first recognize all the triggered pixel acquisition circuits (by means of their triggered state) and then scan their sampled time signal out of the sensor one by one. In addition, in this embodiment, the row scanner further comprises a row address encoding module. Accordingly, the column scanner further comprises a column address encoding module. In this way, the readout unit can output the time signal (of the triggered pixel acquisition circuit) together with their address information.

What needs to be further explained is that aside from the configuration of the signal output lines shown in Fig. 10, it can also be configured to comprise one signal output line and one trigger state output line. Accordingly, the sample and hold unit in each pixel acquisition circuit can be configured as the implementation shown in Fig. 8B. The signal output unit is configured as the implementation shown in Fig. 9B. In addition, the photodetection unit 610 can also be configured as the implementations shown in Fig. 5A, Fig. 5C, and Fig. 5D. The signal processing module 621 can be configured as the implementations shown in Fig. 6A, Fig. 6C, and Fig. 6D. The threshold comparison module 622 can be configured as the implementations shown in Fig. 7A, Fig. 7B, and Fig. 7D, which will not be elaborated here.

In summary, the optical flow sensor in accordance with the invention can instruct the pixel acquisition circuit array to operate under image mode or optical flow mode through the global control unit. Under image mode, the whole pixel acquisition circuit array is configured to acquire a full image. Especially in some application scenarios demanding high-speed photography, the optical flow sensor in accordance with the invention is capable of capturing sharp and lag-free images thanks to the elimination of the exposure time. In this way, images acquired by the optical flow sensor can provide full background information for subsequent optical flow frames. Under optical flow mode, each pixel acquisition circuit continuously responds to local light intensity and determines whether to be activated based on the detected light intensity change. In this way, each pixel acquisition circuit of the invention can individually acquire the time signal relating to the optical flow information of a moving object, that is, to acquire an optical flow frame. On this basis, the motion trajectory of a target object can be clearly characterized by multiple frames of time signals and corresponding address information acquired by the optical flow sensor of the invention. In summary, the optical flow sensor of the invention can provide clear and straightforward optical flow information, thus greatly reducing redundant information, and furthermore can reduce the computational complexity of subsequent optical flow algorithms and enhance the real-timeness of optical flow calculations.

Numerous specific details have been explained in the specification provided herein. However, it should be understood that the embodiments of the invention can be practiced without these specific details. In some instances, the methods, structures, and techniques well-known in the art are not shown in detail, in order to avoid obscuring the understanding of the specification.

It should be understood by those skilled in the art that the modules or elements or components of a device in an example disclosed herein can be disposed on the device as described in that embodiment, or alternatively can be located on one or more devices that are different from the device in that example. The modules in the foregoing example can be combined into one module, or can further be divided into multiple sub-modules.

It could be understood by those skilled in the art that the modules of a device in an embodiment can be adaptively changed, and can be arranged on one or more devices that are different from the device in that embodiment. The modules or elements of components in the embodiment can be combined into one module or element or component, and can further be divided into multiple sub-modules or sub-elements or sub-components. Unless at least some of the features and/or procedures or elements are mutually exclusive, all the features disclosed in the specification (including the accompanying claims, abstract and drawings) and all the procedures or elements of any method or device hereby disclosed can be combined in any combination.

Unless otherwise specified, the ordinal terms, such as "first", "second", "third", etc., used herein for describing normal objects only represent different instances relating to the similar objects, and do not intend to imply that the described objects must have certain order in terms of time, space, ranking, or any other aspect.

Although the invention has been described according to a limited number of embodiments, it will be appreciated by those skilled in the art benefiting from the foregoing description that other embodiments can be conceived within the scope of the invention hereby described. In addition, it should be noticed that the language used in the specification has been chosen for the purposes of readability and teaching, and not for explaining or defining the subject matter of the invention. Therefore, a lot of modifications and alterations will become apparent to those having ordinary skills in the art without departing from the scope of the appended claims. As for the scope of the invention, the disclosure of the invention intends to be illustrative and not limiting, and the scope of the invention is defined by the appended claims.

## Claims

1. An optical flow sensor(1 10; 500) comprising an array of pixel acquisition circuits (400) and a global control unit(520), each pixel acquisition circuit comprising:
a photodetection unit (410, 610) operative to output a first electrical signal responding to the incident light intensity in real time;
a signal detection unit (420, 620) with its input terminal coupled with the output terminal of the photodetection unit (410, 610), and operative to output a first trigger signal when detecting that the first electrical signal meets predetermined trigger conditions and when a reset signal received from a reset signal line is OFF;
an OR logic unit (430, 630) with its input terminal coupled with both the output terminal of the signal detection unit (420, 620) and a global trigger signal line of the optical flow sensor (110; 500), and operative to output an acquisition instruction signal when receiving the first trigger signal or a global trigger signal from the global trigger signal line;
an acquisition control unit (440, 640) with its input terminal coupled with the output terminal of the OR logic unit (430, 630), and operative to output and keep an activation signal when receiving the acquisition instruction signal, said acquisition control unit (440, 640) is connected with the reset signal line, and operative to revoke said activation signal when receiving the reset signal from the reset signal line;
a sample and hold unit (450, 650) with its first input terminal coupled with the output terminal of the photodetection unit (410, 610), its second input terminal coupled with a time signal line, and its third input terminal coupled with the output terminal of the acquisition control unit (440, 640), and operative to receive the activation signal, and sample and hold the first electrical signal and time signal at the moment of the receiving of the activation signal; and
a signal output unit (460, 660) being coupled with both the acquisition control unit (440, 640) and the sample and hold unit (450, 650), and operative to buffer and output the activation signal and the first electrical signal and/or time signal most recently sampled by the sample and hold unit (450, 650);
wherein the global control unit (520) is configured to send the reset signal through the reset signal line to all the signal detection units (420, 621) and to all acquisition control units (440,640), the time period between two adjacent reset signals corresponds to one frame,
wherein in imaging mode the global control unit is configured to send, following the reset signal, the global trigger signal through the global trigger signal line to all the pixel acquisition circuits (400), which activates all the pixel acquisition circuits to sample an image frame by setting the acquisition control units (440, 640), and
wherein in optical flow mode, the global control unit (520) does not output the global trigger signal between two reset signals, so that the pixel acquisition circuits decide whether to be activated and acquire an optical flow frame according to the change of relevant detected light intensity.

2. The optical flow sensor (110; 500) as claimed in claim 1, wherein, said time signal line is operative to transmit a periodic signal waveform to said sample and hold unit (450);
the time signal sampled by said sample and hold unit (450) is the amplitude signal of that periodic signal waveform at the present acquisition instant in time.

3. The optical flow sensor (110; 500) as claimed in claim 1, wherein, said photodetection unit (410) comprises:
a photodiode (PD₁) with its anode grounded;
a first transistor (T₁) with its source connected with the cathode of the photodiode (PD₁) and its drain and gate connected to the power supply (VDD).

4. The optical flow sensor (110; 500) as claimed in claim 1, wherein, said photodetection unit (410) comprises:
a photodiode (PD₁) with its anode grounded;
a first transistor (T₁) with its source connected with the cathode of the photodiode (PD₁) and its drain connected with the power supply (VDD);
a first amplifier (A₁) connected between the cathode of the photodiode (PD₁) and the gate of the first transistor (T₁).

5. The optical flow sensor (110; 500) as claimed in claim 1, wherein, said photodetection unit (410) comprises:
a photodiode (PD₁) with its anode grounded;
N transistors connected in series, wherein, N ≥ 2, the source of the 1st transistor is connected with the cathode of the photodiode (PD₁), the drain of the Nth transistor is connected to the power supply (VDD), each transistor has its gate and drain connected together, and the source of each of the 2nd to the Nth transistors is connected to the drain of the previous transistor.

6. The optical flow sensor (110; 500) as claimed in claim 1, wherein, said photodetection unit (410) comprises:
a photodiode (PD₁) with its anode grounded;
N transistors connected in series, wherein, N ≥ 2, the source of the 1st transistor is connected with the cathode of the photodiode (PDi), the drain of the Nth transistor is connected to the power supply (VDD), the source of each of the 2nd to the Nth transistors is connected to the drain of the previous transistor, and each of the 2nd to the Nth transistors has its gate and drain connected together;
a first amplifier (A₁) connected between the cathode of the photodiode (PD₁) and the gate of the 1st transistor.

7. The optical flow sensor (110; 500) as claimed in claim 1, wherein, said signal detection unit (420) comprises:
a signal processing module (421) operative to perform a high-pass filtering process on said first electrical signal in order to obtain a corresponding second electrical signal;
a threshold comparison module (422) operative to output said first trigger signal when determining that the second electrical signal is greater than a first threshold or less than a second threshold.

8. The optical flow sensor (110; 500) as claimed in claim 1, wherein, said signal detection unit (420) comprises:
a signal processing module (421) operative to perform an amplification process and a high-pass filtering process on said first electrical signal in order to obtain a corresponding second electrical signal;
a threshold comparison module (422) operative to output said first trigger signal when determining that the second electrical signal is greater than a first threshold or less than a second threshold.

9. The optical flow sensor (110; 500) as claimed in claim 8, wherein, said signal processing module (421) comprises:
a second amplifier (A₂) with its positive input electrode connected to the output terminal of said photodetection unit and its negative input electrode connected with a first resistor (Ri) which acts as a pull-down resistor, with a second resistor (R₂) connected between its output terminal and negative input electrode, and operative to perform said amplification process on the first electrical signal output by said photodetection unit;
a high-pass filter connected to that second amplifier (A₂), and operative to filter out the signal component below a frequency threshold in the amplified first electrical signal, so as to output said second electrical signal.

10. The optical flow sensor (110; 500)as claimed in claim 9, further comprising:
a waveform generator (113) operative to output a periodic signal waveform to the time signal line coupled with each of the pixel acquisition circuits in the array;
wherein the global control unit (112) is operative to output an global activation signal to each pixel acquisition circuit (400) through the global trigger signal line, and output the reset signal to each pixel acquisition circuit through said reset signal line;
a readout unit (114) operative to read the signals output by at least a part of the pixel acquisition circuits (400) in that array.

11. The optical flow sensor (110) as claimed in claim 10, wherein, said global control unit (112) is operative to:
configure the operation mode of said pixel acquisition circuit array (111) in each sampling time period, that operation mode including optical flow mode and image mode;
when the current sampling time period is configured in image mode, output said reset signal and said global trigger signal in that sampling time period in sequence, in order for that pixel acquisition circuit array to be globally activated and for the first electrical signal of each pixel acquisition circuit to be read by said readout unit;
when the current sampling time period is configured in optical flow mode, output said reset signal at the starting point of time of that sampling time period, in order for the time signal to be acquired by the pixel acquisition circuits (400) meeting said predetermined trigger conditions and to be read by said readout unit.

12. The optical flow sensor (110; 500) as claimed in claim 10, wherein, said readout unit (114) comprises:
a row scanner (540);
a column scanner (550);
a readout controller (560) operative to instruct the row scanner to select one row of pixel acquisition circuits in sequence,
and when one row is selected by the row scanner, instruct the column scanner to read the signals output by at least a part of the pixel acquisition circuits in that row one by one.

13. The optical flow sensor (110; 500) as claimed in claim 10, wherein, said readout unit (114) comprises:
a row scanner (540);
a column scanner (550);
a readout controller (560) operative to instruct the row scanner to select one row of pixel acquisition circuits in sequence,
and when one row is selected by the row scanner, instruct the column scanner to read the signals output only by the pixel acquisition circuits that are in activated state.

14. An image acquisition system (100), comprising:
an optical flow sensor (110) as claimed in claim 13;
an image pre-processor (120) operative to obtain information from the optical flow sensor under image mode; and
an optical flow pre-processor (130) operative to obtain information from the optical flow sensor under optical flow mode.

## Patentansprüche

1. Optischer Flusssensor (110; 500) mit einer Anordnung von Pixelerfassungsschaltungen (400) und einer globalen Steuereinheit (520), wobei jede Pixelerfassungsschaltung umfasst:
eine optische Detektionseinheit (410, 610), die dazu dient, ein erstes elektrisches Signal als Reaktion auf die einfallende Lichtintensität in Echtzeit auszugeben;
eine Signaldetektionseinheit (420, 620), deren Eingangsanschluss mit dem Ausgangsanschluss der optischen Detektionseinheit (410, 610) gekoppelt ist, und die dazu dient, ein erstes Auslösesignal auszugeben, wenn detektiert wird, dass das erste elektrische Signal vorbestimmte Auslösebedingungen erfüllt, und wenn ein von einer Rücksetzsignalleitung empfangenes Rücksetzsignal auf AUS steht;
eine ODER-Logikeinheit (430, 630), deren Eingangsanschluss sowohl mit dem Ausgangsanschluss der Signaldetektionseinheit (420, 620) als auch mit einer globalen Auslösesignalleitung des optischen Flusssensors (110; 500) gekoppelt ist, und die dazu dient, ein Erfassungsanweisungssignal auszugeben, wenn sie das erste Auslösesignal oder ein globales Auslösesignal von der globalen Auslösesignalleitung empfängt;
eine Erfassungssteuereinheit (440, 640), deren Eingangsanschluss mit dem Ausgangsanschluss der ODER-Logikeinheit (430, 630) gekoppelt ist und die dazu dient, ein Aktivierungssignal auszugeben und zu halten, wenn sie das Erfassungsbefehlssignal empfängt, wobei die Erfassungssteuereinheit (440, 640) mit der Rücksetzsignalleitung verbunden ist und dazu dient, das Aktivierungssignal zu widerrufen, wenn sie das Rücksetzsignal von der Rücksetzsignalleitung empfängt;
eine Abtast- und Halteeinheit (450, 650), deren erster Eingangsanschluss mit dem Ausgangsanschluss der optischen Detektionseinheit (410, 610) gekoppelt ist, deren zweiter Eingangsanschluss mit einer Zeitsignalleitung gekoppelt ist und deren dritter Eingangsanschluss mit dem Ausgangsanschluss der Erfassungssteuereinheit (440, 640) gekoppelt ist, und die dazu dient, das Aktivierungssignal zu empfangen und das erste elektrische Signal und das Zeitsignal im Moment des Empfangs des Aktivierungssignals abzutasten und zu halten; und
eine Signalausgabeeinheit (460, 660), die sowohl mit der Erfassungssteuereinheit (440, 640) als auch mit der Abtast- und Halteeinheit (450, 650) gekoppelt ist und dazu dient, das Aktivierungssignal und das erste elektrische Signal und/oder Zeitsignal, das zuletzt von der Abtast- und Halteeinheit (450, 650) abgetastet wurde, zu puffern und auszugeben;
wobei die globale Steuereinheit (520) so konfiguriert ist, dass sie das Rücksetzsignal über die Rücksetzsignalleitung an alle Signalerfassungseinheiten (420, 621) und an alle Erfassungssteuereinheiten (440, 640) sendet, wobei die Zeitspanne zwischen zwei benachbarten Rücksetzsignalen einem Rahmen entspricht,
wobei im Abbildungsmodus die globale Steuereinheit so konfiguriert ist, dass sie im Anschluss an das Rücksetzsignal das globale Auslösesignal über die globale Auslösesignalleitung an alle Pixelerfassungsschaltungen (400) sendet, wodurch alle Pixelerfassungsschaltungen aktiviert werden, um einen Bildrahmen abzutasten, indem die Erfassungssteuereinheiten (440, 640) eingestellt werden, und
wobei im optischen Flussmodus die globale Steuereinheit (520) das globale Auslösesignal zwischen zwei Rücksetzsignalen nicht ausgibt, so dass die Pixelerfassungsschaltungen entscheiden, ob sie aktiviert werden und einen optischen Flussrahmen entsprechend der Änderung der relevanten erfassten Lichtintensität erfassen.

2. Optischer Flusssensor (110; 500) nach Anspruch 1, wobei die Zeitsignalleitung dazu dient, eine periodische Signalwellenform an die Abtast- und Halteeinheit (450) zu übertragen;
das von der Abtast- und Halteeinheit (450) abgetastete Zeitsignal das Amplitudensignal dieser periodischen Signalwellenform zum gegenwärtigen Erfassungszeitpunkt ist.

3. Optischer Flusssensor (110; 500) nach Anspruch 1, wobei die besagte optische Erfassungseinheit (410) umfasst:
eine Photodiode (PDi), deren Anode geerdet ist;
einen ersten Transistor (T₁), dessen Quelle mit der Kathode der Fotodiode (PDi) und dessen Ablauf und Gate mit der Stromversorgung (VDD) verbunden sind.

4. Optischer Flusssensor (110; 500) nach Anspruch 1, wobei die besagte optische Erfassungseinheit (410) umfasst:
eine Photodiode (PDi), deren Anode geerdet ist;
einen ersten Transistor (T₁), dessen Quelle mit der Kathode der Fotodiode (PDi) und dessen Ablauf mit der Stromversorgung (VDD) verbunden ist;
einen ersten Verstärker (A₁), der zwischen der Kathode der Photodiode (PDi) und dem Gate des ersten Transistors (T₁) angeschlossen ist.

5. Optischer Flusssensor (110; 500) nach Anspruch 1, wobei die besagte optische Erfassungseinheit (410) umfasst:
eine Photodiode (PDi), deren Anode geerdet ist;
N in Reihe geschaltete Transistoren, wobei N≥ 2 und die Quelle des ersten Transistors mit der Kathode der Photodiode (PD₁) verbunden ist, der Ablauf des N-ten Transistors mit der Stromversorgung (VDD) verbunden ist, Gate und Ablauf jedes Transistors miteinander verbunden sind und die Quelle jedes vom zweiten bis n-ten Transistor mit dem Ablauf des vorherigen Transistors verbunden ist.

6. Optischer Flusssensor (110; 500) nach Anspruch 1, wobei die besagte optische Erfassungseinheit (410) umfasst:
eine Photodiode (PDi), deren Anode geerdet ist;
N in Reihe geschaltete Transistoren, wobei N≥ 2 und die Quelle des ersten Transistors mit der Kathode der Photodiode (PD₁) verbunden ist, der Ablauf des N-ten Transistors mit der Stromversorgung (VDD) verbunden ist, die Quelle des zweiten bis N-ten Transistors mit dem Ablauf des vorhergehenden Transistors verbunden ist, und beim zweiten bis N-ten Transistor Gate und Ablauf miteinander verbunden sind;
ein erster Verstärker (A₁), verbunden zwischen der Kathode der Photodiode (PDi) und dem Gate des ersten Transistors.

7. Optischer Flusssensor (110; 500) nach Anspruch 1, wobei die besagte Signaldetektionseinheit (420) umfasst:
ein Signalverarbeitungsmodul (421), das dazu dient, einen Hochpaßfilterungsprozess am ersten elektrischen Signal durchzuführen, um ein entsprechendes zweites elektrisches Signal zu erhalten;
ein Schwellenwert-Vergleichsmodul (422), das dazu dient, das erste Auslösesignal auszugeben, wenn es feststellt, dass das zweite elektrische Signal größer als ein erster Schwellenwert oder kleiner als ein zweiter Schwellenwert ist.

8. Optischer Flusssensor (110; 500) nach Anspruch 1, wobei die besagte Signaldetektionseinheit (420) umfasst:
ein Signalverarbeitungsmodul (421), das dazu dient, einen Verstärkungsprozess und einen Hochpaßfilterungsprozess am ersten elektrischen Signal durchzuführen, um ein entsprechendes zweites elektrisches Signal zu erhalten;
ein Schwellenwert-Vergleichsmodul (422), das dazu dient, das erste Auslösesignal auszugeben, wenn es feststellt, dass das zweite elektrische Signal größer als ein erster Schwellenwert oder kleiner als ein zweiter Schwellenwert ist.

9. Optischer Flusssensor (110; 500) nach Anspruch 8, wobei das besagte Signalverarbeitungsmodul (421) umfasst:
einen zweiten Verstärker (A₂), dessen positive Eingangselektrode mit der Ausgangsanschlussklemme der optischen Detektionseinheit verbunden ist und dessen negative Eingangselektrode mit einem ersten Widerstand (Ri) verbunden ist, der als Pull-Down-Widerstand wirkt, mit einem zweiten Widerstand (R₂), der zwischen seiner Ausgangsanschlussklemme und der negativen Eingangselektrode angeschlossen ist, und der dazu dient, den besagten Verstärkungsprozess am ersten elektrischen Signal, das von der optischen Detektionseinheit ausgegeben wird, durchführt;
einem Hochpaßfilter, der mit dem zweiten Verstärker (A₂) verbunden ist und dazu dient, die Signalkomponente unterhalb eines Frequenzschwellenwerts in dem verstärkten ersten elektrischen Signal herauszufiltern, um das zweite elektrische Signal auszugeben.

10. Optischer Flusssensor (110; 500) nach Anspruch 9, ferner umfassend:
einen Wellenformgenerator (113), der dazu dient, eine periodische Signalwellenform an die Zeitsignalleitung auszugeben, die mit jeder der Pixelerfassungsschaltungen in der Anordnung gekoppelt ist;
wobei die globale Steuereinheit (112) dazu dient, ein globales Aktivierungssignal an jede Pixelerfassungsschaltung (400) über die globale Auslösesignalleitung auszugeben und das Rücksetzsignal an jede Pixelerfassungsschaltung über die besagte Rücksetzsignalleitung auszugeben;
eine Ausleseeinheit (114), die dazu dient, mindestens einem Teil der Pixelerfassungsschaltungen (400) in dieser Anordnung ausgegebenen Signale auszulesen.

11. Optischer Flusssensor (110) nach Anspruch 10, wobei die besagte globale Steuereinheit (112) dazu dient:
den Betriebsmodus der Pixelerfassungsschaltungsanordnung (111) in jeder Abtastzeitperiode zu konfigurieren, wobei dieser Betriebsmodus den optischen Flussmodus und den Bildmodus umfasst;
das Rücksetzsignal und das globale Auslösesignal in dieser Abtastzeitperiode nacheinander auszugeben, wenn die aktuelle Abtastzeitperiode im Bildmodus konfiguriert ist, damit diese Pixelerfassungsschaltungsanordnung global aktiviert wird und das erste elektrische Signal jeder Pixelerfassungsschaltung von der Ausleseeinheit gelesen wird;
das Rücksetzsignal zum Startzeitpunkt dieser Abtastzeitperiode auszugeben, wenn die aktuelle Abtastzeitperiode im optischen Flussmodus konfiguriert ist, damit das Zeitsignal durch die Pixelerfassungsschaltungen (400), die die vorbestimmten Auslösebedingungen erfüllen, erfasst und durch die Ausleseeinheit gelesen werden kann.

12. Optischer Flusssensor (110; 500) nach Anspruch 10, wobei besagte Ausleseeinheit (114) umfasst:
einen Zeilenscanner (540);
einen Spaltenscanner (550);
eine Auslesesteuerung (560), die dazu dient, den Zeilenscanner anzuweisen, eine Reihe von Pixelerfassungsschaltungen nacheinander auszuwählen,
und, wenn eine Zeile durch den Zeilenscanner ausgewählt wird, den Spaltenscanner anzuweisen, die von mindestens einem Teil der Pixelerfassungsschaltungen in dieser Zeile ausgegebenen Signale einzeln zu lesen.

13. Optischer Flusssensor (110; 500) nach Anspruch 10, wobei besagte Ausleseeinheit (114) umfasst:
einen Zeilenscanner (540);
einen Spaltenscanner (550);
eine Auslesesteuerung (560), die dazu dient, den Zeilenscanner anzuweisen, eine Reihe von Pixelerfassungsschaltungen nacheinander auszuwählen,
und, wenn eine Zeile durch den Zeilenscanner ausgewählt wird, den Spaltenscanner anzuweisen, nur die Signale zu lesen, die von den aktivierten Pixelerfassungsschaltungen ausgegeben werden.

14. Bilderfassungssystem (100), das Folgendes umfasst:
einen optischen Flusssensor (110) nach Anspruch 13;
einen Bildvorverarbeitungsprozessor (120), der dazu dient, im Bildmodus Informationen von dem optischen Durchflusssensor zu erhalten; und
einen optischen Flussvorprozessor (130), der dazu dient, Informationen vom optischen Flusssensor im optischen Flussmodus zu erhalten.

## Revendications

1. Capteur de flux optique (110 ; 500) comprenant un réseau de circuits d'acquisition de pixels (400) et une unité de commande globale (520), chaque circuit d'acquisition de pixel comprenant :
une unité de photodétection (410, 610) fonctionnant pour sortir un premier signal électrique répondant à l'intensité de la lumière incidente en temps réel ;
une unité de détection de signal (420, 620) avec sa borne d'entrée couplée à la borne de sortie de l'unité de photodétection (410, 610), et fonctionnant pour sortir un premier signal de déclenchement lorsqu'il est détecté que le premier signal électrique satisfait à des conditions de déclenchement prédéterminées et lorsqu'un signal de réinitialisation reçu d'une ligne de signal de réinitialisation est OFF ;
une unité logique OU (430, 630) dont la borne d'entrée est couplée à la fois à la borne de sortie de l'unité de détection de signal (420, 620) et à une ligne de signal de déclenchement global du capteur de flux optique (110 ; 500), et fonctionnant pour sortir un signal d'instruction d'acquisition lors de la réception du premier signal de déclenchement ou d'un signal de déclenchement global provenant de la ligne de signal de déclenchement global ;
une unité de commande d'acquisition (440, 640) dont la borne d'entrée est couplée à la borne de sortie de l'unité logique OU (430, 630), et fonctionnant pour sortir et conserver un signal d'activation lors de la réception du signal d'instruction d'acquisition, ladite unité de commande d'acquisition (440, 640) est connectée à la ligne de signal de réinitialisation, et fonctionnant pour révoquer ledit signal d'activation lors de la réception du signal de réinitialisation provenant de la ligne de signal de réinitialisation ;
une unité d'échantillonnage et de maintien (450, 650) avec sa première borne d'entrée couplée à la borne de sortie de l'unité de photodétection (410, 610), sa deuxième borne d'entrée couplée à une ligne de signal de temps, et sa troisième borne d'entrée couplée à la borne de sortie de l'unité de commande d'acquisition (440, 640), et fonctionnant pour recevoir le signal d'activation, et échantillonner et maintenir le premier signal électrique et le signal de temps au moment de la réception du signal d'activation ; et
une unité de sortie de signal (460, 660) étant couplée à la fois à l'unité de commande d'acquisition (440, 640) et à l'unité d'échantillonnage et de maintien (450, 650), et fonctionnant pour mettre en tampon et sortir le signal d'activation et le premier signal électrique et/ou signal de temps le plus récemment échantillonné par l'unité d'échantillonnage et de maintien (450, 650) ;
dans lequel l'unité de commande globale (520) est configurée pour envoyer le signal de réinitialisation par l'intermédiaire de la ligne de signal de réinitialisation à toutes les unités de détection de signal (420, 621) et à toutes les unités de commande d'acquisition (440, 640), la période de temps entre deux signaux de réinitialisation adjacents correspond à une trame,
dans lequel, en mode d'imagerie, l'unité de commande globale est configurée pour envoyer, après le signal de réinitialisation, le signal de déclenchement global par l'intermédiaire de la ligne de signal de déclenchement global à tous les circuits d'acquisition de pixels (400), ce qui active tous les circuits d'acquisition de pixels pour échantillonner une trame d'image en réglant les unités de commande d'acquisition (440, 640), et
dans lequel, en mode de flux optique, l'unité de commande globale (520) ne délivre pas le signal de déclenchement global entre deux signaux de réinitialisation, de sorte que les circuits d'acquisition de pixels décident d'être activés et d'acquérir une trame de flux optique en fonction du changement de l'intensité lumineuse détectée pertinente.

2. Capteur de flux optique (110 ; 500) selon la revendication 1, dans lequel ladite ligne de signal temporel est opérationnelle pour transmettre une forme d'onde de signal périodique à ladite unité d'échantillonnage et de maintien (450) ;
le signal temporel échantillonné par ladite unité d'échantillonnage et de maintien (450) est le signal d'amplitude de cette forme d'onde de signal périodique à l'instant d'acquisition actuel dans le temps.

3. Capteur de flux optique (110 ; 500) selon la revendication 1, dans lequel, ladite unité de photodétection (410) comprend :
une photodiode (PDi) dont l'anode est mise à la terre ;
un premier transistor (T₁) dont la source est connectée à la cathode de la photodiode (PDi) et dont le drain et la grille sont connectés à l'alimentation électrique (VDD).

4. Capteur de flux optique (110 ; 500) selon la revendication 1, dans lequel, ladite unité de photodétection (410) comprend :
une photodiode (PDi) dont l'anode est mise à la terre ;
un premier transistor (T₁) dont la source est connectée à la cathode de la photodiode (PDi) et dont le drain est connecté à l'alimentation électrique (VDD) ;
un premier amplificateur (A₁) connecté entre la cathode de la photodiode (PDi) et la grille du premier transistor (T₁).

5. Capteur de flux optique (110 ; 500) selon la revendication 1, dans lequel, ladite unité de photodétection (410) comprend :
une photodiode (PDi) dont l'anode est mise à la terre ;
N transistors connectés en série, dans lesquels, N≥ 2, la source du 1er transistor est connectée à la cathode de la photodiode (PDi), le drain du Nième transistor est connecté à l'alimentation (VDD), chaque transistor a sa grille et son drain connectés ensemble, et la source de chacun des 2e à Nième transistors est connectée au drain du transistor précédent.

6. Capteur de flux optique (110 ; 500) selon la revendication 1, dans lequel, ladite unité de photodétection (410) comprend :
une photodiode (PDi) dont l'anode est mise à la terre ;
N transistors connectés en série, dans lesquels, N≥ 2, la source du 1er transistor est connectée à la cathode de la photodiode (PDi), le drain du Nième transistor est connecté à l'alimentation électrique (VDD), la source de chacun des 2e à Nième transistors est connectée au drain du transistor précédent, et chacun des 2e à Nième transistors a sa grille et son drain connectés ensemble ;
un premier amplificateur (A₁) connecté entre la cathode de la photodiode (PDi) et la grille du premier transistor.

7. Capteur de flux optique (110 ; 500) selon la revendication 1, dans lequel, ladite unité de détection de signal (420) comprend :
un module de traitement de signal (421) fonctionnant pour effectuer un processus de filtrage passe-haut sur ledit premier signal électrique afin d'obtenir un second signal électrique correspondant ;
un module de comparaison de seuil (422) fonctionnant pour sortir ledit premier signal de déclenchement lorsqu'il détermine que le second signal électrique est supérieur à un premier seuil ou inférieur à un second seuil.

8. Capteur de flux optique (110 ; 500) selon la revendication 1, dans lequel, ladite unité de détection de signal (420) comprend :
un module de traitement de signal (421) fonctionnant pour effectuer un processus d'amplification et un processus de filtrage passe-haut sur ledit premier signal électrique afin d'obtenir un second signal électrique correspondant ;
un module de comparaison de seuil (422) fonctionnant pour sortir ledit premier signal de déclenchement lorsqu'il détermine que le second signal électrique est supérieur à un premier seuil ou inférieur à un second seuil.

9. Capteur de flux optique (110 ; 500) selon la revendication 8, dans lequel, ledit module de traitement de signal (421) comprend :
un deuxième amplificateur (A2) dont l'électrode d'entrée positive est connectée à la borne de sortie de ladite unité de photodétection et dont l'électrode d'entrée négative est connectée à une première résistance (Ri) qui agit comme une résistance d'excursion basse, avec une deuxième résistance (R₂) connectée entre sa borne de sortie et l'électrode d'entrée négative, et servant à exécuter ledit processus d'amplification sur le premier signal électrique émis par ladite unité de photodétection ;
un filtre passe-haut connecté à ce second amplificateur (A₂), et fonctionnant pour éliminer par filtrage la composante de signal inférieure à un seuil de fréquence dans le premier signal électrique amplifié, de manière à délivrer ledit second signal électrique.

10. Capteur de flux optique (110 ; 500) selon la revendication 9, comprenant en outre :
un générateur de forme d'onde (113) fonctionnant pour sortir une forme d'onde de signal périodique vers la ligne de signal temporel couplée à chacun des circuits d'acquisition de pixels dans la matrice ;
dans lequel l'unité de commande globale (112) est opérationnelle pour délivrer un signal d'activation globale à chaque circuit d'acquisition de pixel (400) par l'intermédiaire de la ligne de signal de déclenchement global, et délivrer le signal de réinitialisation à chaque circuit d'acquisition de pixel par l'intermédiaire de ladite ligne de signal de réinitialisation ;
une unité de lecture (114) fonctionnant pour lire les signaux émis par au moins une partie des circuits d'acquisition de pixels (400) dans cette matrice.

11. Capteur de flux optique (110) selon la revendication 10, dans lequel, ladite unité de commande globale (112) est opérationnelle pour :
configurer le mode de fonctionnement dudit réseau de circuits d'acquisition de pixels (111) dans chaque période de temps d'échantillonnage, ce mode de fonctionnement comprenant un mode de flux optique et un mode image ;
lorsque la période de temps d'échantillonnage actuelle est configurée en mode image, sortir ledit signal de réinitialisation et ledit signal de déclenchement global dans cette période de temps d'échantillonnage en séquence, afin que cette matrice de circuits d'acquisition de pixels soit globalement activée et que le premier signal électrique de chaque circuit d'acquisition de pixels soit lu par ladite unité de lecture ;
lorsque la période de temps d'échantillonnage actuelle est configurée en mode de flux optique, sortir ledit signal de réinitialisation au point de départ de cette période de temps d'échantillonnage, afin que le signal temporel soit acquis par les circuits d'acquisition de pixels (400) répondant auxdites conditions de déclenchement prédéterminées et soit lu par ladite unité de lecture.

12. Capteur de flux optique (110 ; 500) selon la revendication 10, dans lequel, ladite unité de lecture (114) comprend :
un scanner de ligne (540) ;
un scanner de colonne (550) ;
un contrôleur de lecture (560) fonctionnant pour ordonner au scanner de rangée de sélectionner une rangée de circuits d'acquisition de pixels en séquence,
et lorsqu'une rangée est sélectionnée par le dispositif de balayage de rangée, ordonner au dispositif de balayage de colonne de lire les signaux émis par au moins une partie des circuits d'acquisition de pixels dans cette rangée, un par un.

13. Capteur de flux optique (110 ; 500) selon la revendication 10, dans lequel, ladite unité de lecture (114) comprend :
un scanner de ligne (540) ;
un scanner de colonne (550) ;
un contrôleur de lecture (560) fonctionnant pour ordonner au scanner de rangée de sélectionner une rangée de circuits d'acquisition de pixels en séquence,
et lorsqu'une rangée est sélectionnée par le dispositif de balayage de rangée, ordonner au dispositif de balayage de colonne de lire les signaux émis uniquement par les circuits d'acquisition de pixels qui sont dans un état activé.

14. Système d'acquisition d'images (100), comprenant :
un capteur de flux optique (110) selon la revendication 13 ;
un pré-processeur d'image (120) fonctionnant pour obtenir des informations du capteur de flux optique en mode image ; et
un pré-processeur de flux optique (130) fonctionnant pour obtenir des informations du capteur de flux optique en mode de flux optique.
